# EUROPEAN PATENT APPLICATION

(11) **EP 4 015 294 A1**
(43) Date of publication of application: **22.06.2022**
(21) Application number: 20215054.6
(22) Date of filing: 17.12.2020
(51) Int. Cl.: B60L 53/38

(54) **CHARGING STATION FOR A TWO-WHEELER**

(71) Applicant: Ost - Ostschweizer Fachhochschule, 8640 Rapperswil (CH)
(72) Inventor: BÄBLER, Stefan, 8767 Elm (CH); WYSS, Kris, 8037 Zürich (CH); LANG, Hans-Dieter, 8640 Rapperswil (CH)
(74) Representative: Liebetanz, Michael

(57) **Abstract**

A charging station for a two-wheeler (10) comprises a stationary loading part (30) having a primary coil and a vehicle side part (40) having a secondary coil. When the primary coil and the secondary coil are positioned in a predetermined position one from another a loading energy is inductively transmitted from a stationary power supply (36) connected with the primary coil to a battery (45) to be positioned in the two-wheeler (10) connected with the secondary coil. There is a front wheel directional fixing stand (20) for a directional position determination of a front wheel (11) of the two-wheeler (10). The secondary coil of the vehicle side part (40) is positioned at the front portion of the two-wheeler (10) and the primary coil of the stationary loading part (30) is positioned (32, 33, 34) in relation to the front wheel directional fixing stand (20) in a way that the primary coil and secondary coil are positioned in said predetermined position one from another for the transfer of loading energy, when the front wheel (11) is engaging the front wheel directional fixing stand (20) achieving the directional position determination of said front wheel (11).

## Description

### TECHNICAL FIELD

The present invention relates to a charging station for a vehicle, especially for a two-wheeler, e.g. for a moped.

### PRIOR ART

DE 10 2010 042 395 A1 discloses a method for inductive charging of a battery in a vehicle involving performing inductive couple of a primary coil in a loading station and a secondary coil of the vehicle while maintaining a preset gap between the coils. This preferred gap is reached by automatic moving of one or the other coil.

DE 2010 049 041 A1 discloses a charging station for e.g. an electric car with a charging part comprising a primary coil which can be coupled with a secondary coil in the electric car for inductive energy transmission, wherein the connection between the two coils are achieved by magnets which connect the loading station part with the vehicle part.

US 9,869,105 discloses a wheel guide for a vehicle charging station includes front and back sides, and a top extending between the front and back sides. The top defines an aperture sized to circumscribe a wireless transmitter of the charging station. The wheel guide further includes a pair of spaced apart wheel slots recessed into the top. Each wheel slot includes an entrance defined in the front side and a pair of longitudinal walls extending from the entrance toward the back side. At least a portion of each of the walls is configured such that a slope of the wall is shallowest at the entrance and becomes increasingly vertical in a direction towards the back side to guide a wheel of a vehicle towards a centerline of the slot. A charging transmitter is disposed below the alignment structure and will be aligned with a corresponding coil in the vehicle.

DE 10 2012 219 985 A1 discloses a device for inductive transfer of energy to an electrical drivable vehicle, i.e. a bicycle, with an energy transmission unit comprising a ball portion-shaped contact surface. A coil is provided for inductive transfer of energy to the bicycle. The coil comprises a shield made of ferromagnetic material to reduce a magnetic stray field outside of the energy transmission unit, and is extended along the ball portion-shaped contact surface that is adapted to a mechanical support of the vehicle. The shield has a weakening portion in a longitudinal axis of the coil penetrated into the contact surface. Such a loading device necessitates to lift the two-wheeler on the ball as a coupling device.

Based on this prior art it is an object of the present invention to provide a charging station which allows a quick inductive coupling for a two-wheeler without being obliged to manually connect the secondary coil of the vehicle with the primary coil of the loading station.

### SUMMARY OF THE INVENTION

Based on the above prior art, the invention provides a charging station for a two-wheeler comprising a stationary loading part having a primary coil and a vehicle side part having a secondary coil. When the primary coil and the secondary coil are positioned in a predetermined position one from another, a loading energy is inductively transmitted from a stationary power supply connected with the primary coil to a battery to be positioned in the two-wheeler connected with the secondary coil. There is a front wheel directional fixing stand for a directional position determination of a front wheel of the two-wheeler. The secondary coil of the vehicle side part is positioned at the front portion of the two-wheeler and the primary coil of the stationary loading part is positioned in relation to the front wheel directional fixing stand in a way that the primary coil and secondary coil are positioned in said predetermined position one from another for the transfer of loading energy, when the front wheel is engaging the front wheel directional fixing stand achieving the directional position determination of said front wheel.

The invention is based on the insight that a two-wheeler cannot simply be stopped and left where it was stopped as a car, but a stand has to be used to maintain a stable position of the two-wheeler. It is therefore a synergetic technical effect to use the necessity to obtain stability of the standing two-wheeler with the automatic positioning and inductive connection of primary and secondary inductive coils in a power transmitting contact.

The secondary coil can be positioned in a vehicle coil case on the front wheel cover, at the centre portion of the handle bar of the two-wheeler or at the centre portion of a mudguard or the front fairing, if this is pivoting with the handle bar and the front wheel. The advantage of a positioning on the front wheel cover is the small distance between the stand and the station coil case. The front wheel cover and handlebar positions ensure the correct alignment since they are in direct longitudinal prolongation of the oriented front wheel in the stand.

The primary coil can be positioned in a station coil case resiliently connected via a rod assembly to the front wheel directional fixing stand. Thereby, resiliently means that the station coil case takes a predetermined position in the space in front of the stand portion taking the front wheel of the two-wheeler but can be slightly pushed back. This is the movement, when the underside of the station coil case is positioned at a place which would be taken up by the vehicle coil case when the front wheel is engaging the front wheel directional fixing stand achieving the directional position determination of said front wheel, so that the station coil case is pushed back by the upper side of the vehicle coil case achieving said predetermined distance between the primary and secondary coils.

The front wheel directional fixing stand can comprise an essentially vertically oriented front portion of the front wheel receiving groove. Such an element is usually a widening U-shaped groove made of a metal sheet but can also be a groove provided in a concrete structure.

The front wheel retaining element can be positioned in a predetermined distance from the groove, so that a form or force fit maintains the front wheel of the two-wheeler to be charged in position in the groove.

This front wheel retaining element can be a horizontally pivoting arc shaped groove formed out of a metal sheet in a predetermined longitudinal distance from the groove. It can also be an in cross-section circular segment embossment on the ground in a predetermined longitudinal distance from the groove which would be an embossment where the front wheel has to be pushed over. It can also be the complementary negative form of a circular segment cut out recess from the ground in front of the groove. Then the station coil case has to be positioned lower, since the front wheel will be lower than the rear wheel.

It is also possible that the rod assembly comprises a further horizontal pivotal axis at the attachment of the case with the rod assembly to allow an independent pivoting of the case with the primary coil(s) when it is pushed back by the vehicle coil case with the secondary coil(s).

The rod assembly provides preferably some play towards the sides, i.e. to the left and right of the longitudinal rod assembly, which can comprise allowing a small pivotal movement of the coil case to enhance the contact making of the coil cases.

The station coil case can comprise a guiding element around its underside to guide the upper side of the vehicle side case to its predetermined position. It is possible that one or both of the coil cases comprise(s) magnets, permanent or electro-magnets to secure the predetermined position or contact of the upper side with the underside, respectively.

The predetermined position comprises two different aspects. One aspect relates to a predetermined distance of the coils of the stationary part of the inductive power interface to the coils of the vehicle side part of the inductive power interface. Another aspect relates to a predetermined alignment of the coils of the stationary part of the inductive power interface to the coils of the vehicle part of the inductive power interface position. Alignment is related to bringing the coils in parallel plans one to the other and to positioning them facing each other for optimum power transfer as known in the art. In other words, the predetermined position of the primary coil and secondary coil comprises a predetermined distance between the primary coil and secondary coil, an alignment of these coils in parallel plans and an alignment of the coils one above the other, i.e. that they are in concentric relationship. Such an alignment of the coils one above the other comprises the two-dimensional orientation of the coils.

Furthermore, the invention is related to a stationary part of a inductive charging station for a two-wheeler to be used in a charging station as mentioned above, comprising a station coil case housing a primary coil, and further comprising a rod assembly configured to be resiliently connected to a front wheel directional fixing stand, wherein the underside of the station coil case is positioned at a place which would be taken up by a vehicle coil case of a vehicle side part of the inductive charging station, when the front wheel is engaging the front wheel directional fixing stand achieving the directional position determination of said front wheel, so that the station coil case is pushed back by the upper side of the vehicle coil case achieving the predetermined distance between the primary and secondary coils.

Furthermore, the invention is related to a vehicle side part of a inductive charging station for a two-wheeler to be used in a charging station as mentioned above, comprising a vehicle part coil case housing a secondary coil, wherein the vehicle part coil case is attached at the front portion of the two-wheeler in a way that the upper side of the vehicle station coil case is positioned at a place which would be taken up by a station coil case of a station side part of the inductive charging station, when the front wheel is engaging the front wheel directional fixing stand achieving the directional position determination of said front wheel, so that the vehicle coil case pushes back the underside of the station coil case achieving the predetermined distance between the primary and secondary coils.

It is noted that the vehicle coil case is not necessarily mounted on the front wheel cover but can also be attached at a higher position near and in connection with the handle bar since the handle bar provides a directional guidance for the vehicle coil case attached there. More specifically, the front wheel, in conjunction with the stand, attached to the handle bar provides the directional guidance. In further embodiments, it is also possible to attach the vehicle coil case to a mudguard, when the two-wheeler is a moped with a small angular movement of the fork, especially with a pivoting axis in longitudinal axis of the mudguard which is usually almost vertical but slightly inclined so that the vehicle coil case can pivot to the left and the right to compensate for a not entirely longitudinally oriented two-wheeler. This can be favorably used in connection with a guiding structure for optimal coil alignment as cited above.

For wireless power transfer systems, to keep the field emissions small the transmitter and receiver coils must be placed close together in the adjacent coil cases. Beyond that, the enclosures of the coils can provide shielding of the magnetic fields, e.g. by either ferrite, meaning magnetisable materials, to guide the fields or by electrically conducting materials which can cancel outer fields via induced eddy currents, which might be necessary to comply with norms or the legal field exposure levels.

Further embodiments of the invention are laid down in the dependent claims.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,
- Fig. 1: shows a schematic side view of an electric two-wheeler in a loading station during inductive loading;
- Fig. 2: shows the front wheel and front wheel cover of the two-wheeler of Fig. 1 In a distance from the loading station of Fig. 1 with a slightly different hinge;
- Fig. 3: shows the view of Fig. 2 with the front wheel of the two-wheeler engaging the loading station stand; and
- Fig. 4a to 4C: show three detail view of the alignment process between the primary coil of the loading station and the secondary coil of the vehicle station.

### DESCRIPTION OF PREFERRED EMBODIMENTS

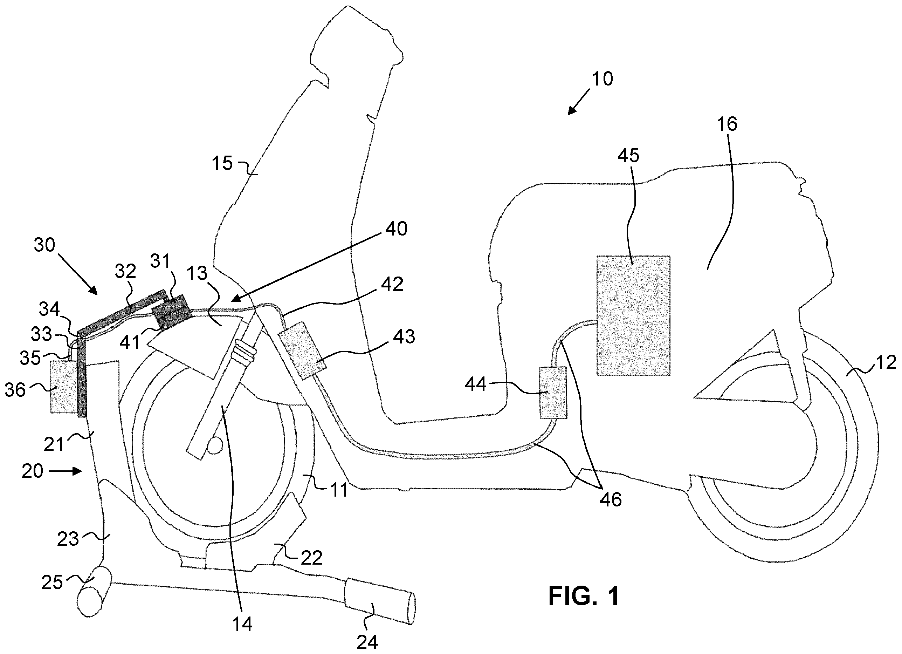

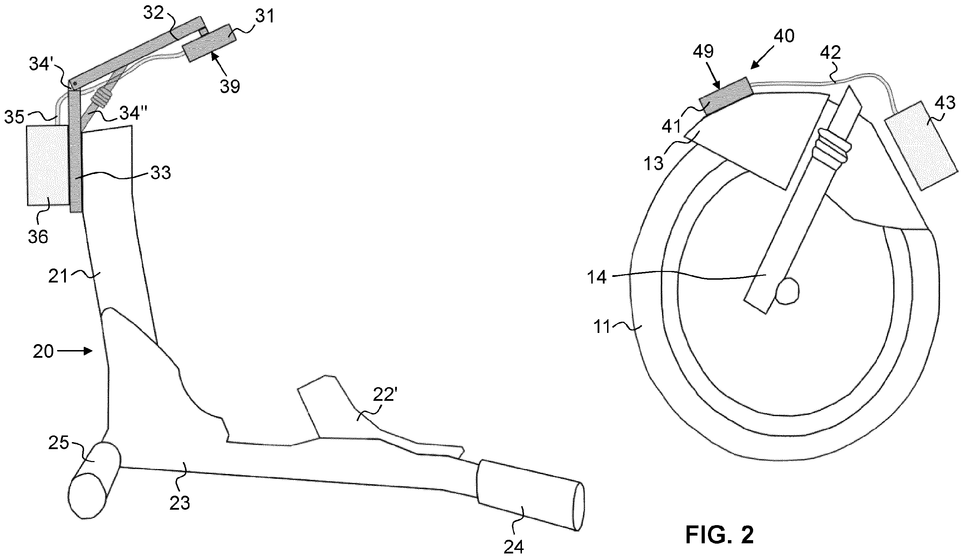

Fig. 1 shows a schematic side view of a two-wheeler 10 in a loading station 30 during inductive loading of a battery 45 of the two-wheeler 10. It can better be understood together with Fig. 2 showing the front wheel 11 of the two-wheeler 10 of Fig. 1 In a distance from the loading station 30 of Fig. 1 with a slightly different hinge construction 34', 34". All reference numerals in all drawings are identical for identical features.

The two-wheeler 10 is preferably an electric two-wheeler but could also be a hybrid two-wheeler 10. The loading station 30 is also mentioned in this present specification as the stationary part 30 of the inductive power interface, which comprises the primary coil located in a station coil case 31, which is - in the loading position - positioned opposite to the vehicle coil case 41 of the vehicle side part 40 of the inductive power interface. The stationary part 30 and the vehicle side part 40 of the inductive power interface form together the two parts of the charging station.

The front wheel 11 of the two-wheeler 10 is engaging the two-wheeler stand 20, which comprises an upper groove for the front wheel 11, which groove 21 is oriented essentially in a vertical direction and which groove is broad enough to accept the rubber part of the front wheel 11 when this front wheel 11 of the two-wheeler 10 is pushed into the stand 20.

The groove 21 is affixed to the basis frame 23 of the two-wheeler stand 20. The basis frame 23 can be standing on the ground with two opposite free ends 25 provided and extending vertically in view of the longitudinal direction of the two-wheeler 10 when in the stand 20, thus forming a T-shape with the basis frame 23.

The basis frame 23 further comprises two free ends 24 positioned in a V-shape, between which free ends 24 the front wheel 11 is pushed into the upper groove 21 for the front wheel 11. In order to obtain the position as shown in Fig. 1 starting from the position of Fig. 2, the front wheel 11 is first engaging the lower groove 22' for the front wheel 11, which is shown in the non-engaged position 22' in Fig. 2. The lower groove 22 is pivotally attached between the free ends 24 at the V-shape in order to pivot when the front wheel 11 is rolling beyond the lower groove 22 to engage the upper groove 21. The lower groove 22' is then pivoting to maintain the front wheel 11 in a predetermined longitudinal position defined by the grooves 21 and 22 and as shown in Fig. 1. The side walls of the grooves 21 and 22 provide at the same time side stability for the front wheel 11 and through its pivotal attachment via the fork 14 with the body 16 of the two-wheeler 10. However, the two-wheeler 10 can have the rear wheel 12 being positioned slightly out of the longitudinal axis defined by the fixed position of the front wheel 11 in the grooves 21 and 22 without endangering the secure stand of the two-wheeler 10.

The stationary part 30 of the inductive power interface is attached with an attachment rod 33 at the basis frame 23 of the two-wheeler stand 20. Said attachment rod 33 is connected via a resilient hinge joint 34 with a connection rod 32 which is attached at the stationary coil case 31 in which the primary coil of the inductive loading station is positioned. A connection cable 35 is connecting the inductive charging coil in the case 31 with the power supply and control unit 36, here attached at the frame 23.

The two-wheeler 10 comprises a fork 14 at which the front wheel 11 is positioned and which fork 14 is comprising a front wheel cover 13. On the front wheel cover 13 is positioned the vehicle coil case 41 with its inside positioned secondary inductive coil. Therefore, the vehicle coil case 41 is and has always a predetermined position in view of the front wheel 11. It is possible that this predetermined position is modified by the damping function of the fork, but usually the front wheel cover 13 is affixed to the lower part of the fork 14 below the damping cylinder(s).

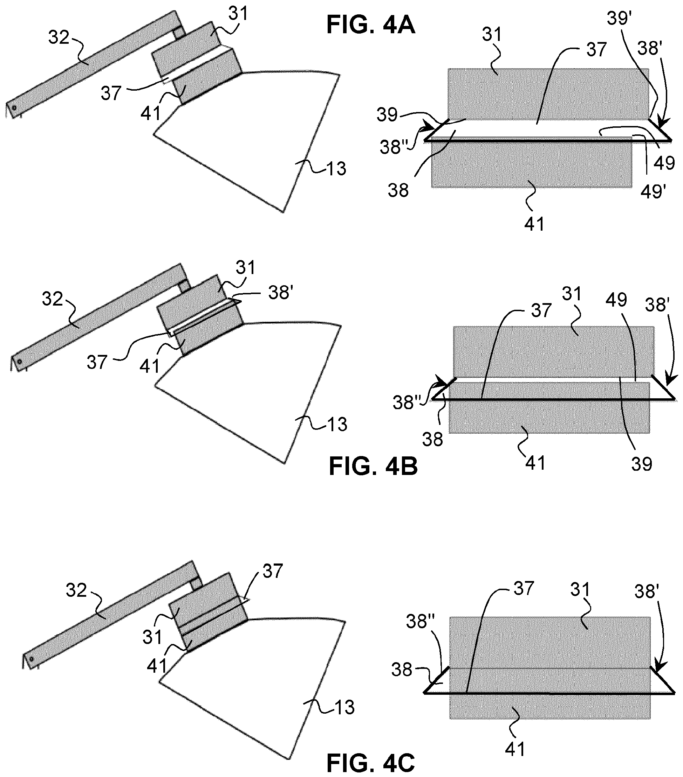

Since the front wheel 11 is fixed in the grooves 21 and 22, the attachment rod 33 at the frame 23 as well as the connection rod 32 with the intervening resilient hinge joint 34 are configured so that in this position of the front wheel 11 the station coil case 31 is positioned in the correct position vis a vis the vehicle coil case 41 as it will be explained in connection with Fig. 4.

Therefore, when the two-wheeler 10 is engaged in the stand 20 the inductive charging can be initiated via the transmitting primary and secondary coils in the station coil case 31 and vehicle coil case 41, respectively. The secondary coil is then connected via a further connection cable 42 to the control unit 43 of the two-wheeler 10 which control unit 43 is connected via a further connection cable 46 to the charger device 44 which is then connected with a battery 45 which is shown in Fig. 1 to be located under the seat of the driver. Of course, this positioning of the elements 43, 44 and 45 are not mandatory at the places shown.

It is only important that the rod construction 33 and 32 predetermining the position of the station coil case 31 are positioned in a way that that when the two-wheeler 10 is engaging the stand 20 that the vehicle coil case 41 is engaging the station coil case 31, e.g. through pushing it upwards against a spring force provided by the joint 34.

It is noted that although such a stand 20 as shown in Fig. 1 and 2 has the advantage that it only needs an electric connection to the power supply and control unit 36 but can be attached to any ground at the four free ends, two free ends 25 at the T and two free ends 24 at the V, it is also possible to attach the upper groove for the front wheel directly on or in a wall with the lower groove 22 attached in the corresponding distance on or in the ground.

It is also possible to replace the lower groove 22 by an embossment on the ground, e.g. in cross-section from the side being a circular segment forming until a semi-cylindrical embossment with the embossment axis is oriented vertical to the longitudinal direction of the two-wheeler 10 as long as the front groove 21 is adapted to fix not only the distance of the front wheel 11 to the lower fixation element but also the direction of said front wheel.

As mentioned above, the hinge joint 34 is different between Fig. 1 and Fig. 2. In Fig. 1 the rod 32 is moving against a spring tensioned joint 34, whereas in Fig. 2 the joint 43' is providing a simple rotation axis and it is a damped spring connection rod 34" pivotally affixed at rods 32 and 33 or frame 23.

Reference numeral 39 designate the lower surface or underside of the station coil case 31 and the upper surface or upper side 39 of the vehicle coil case 41 is marked in a similar way. These surfaces 39 and 49 are in a close contact when the front wheel 11 is pushed into stand 20.

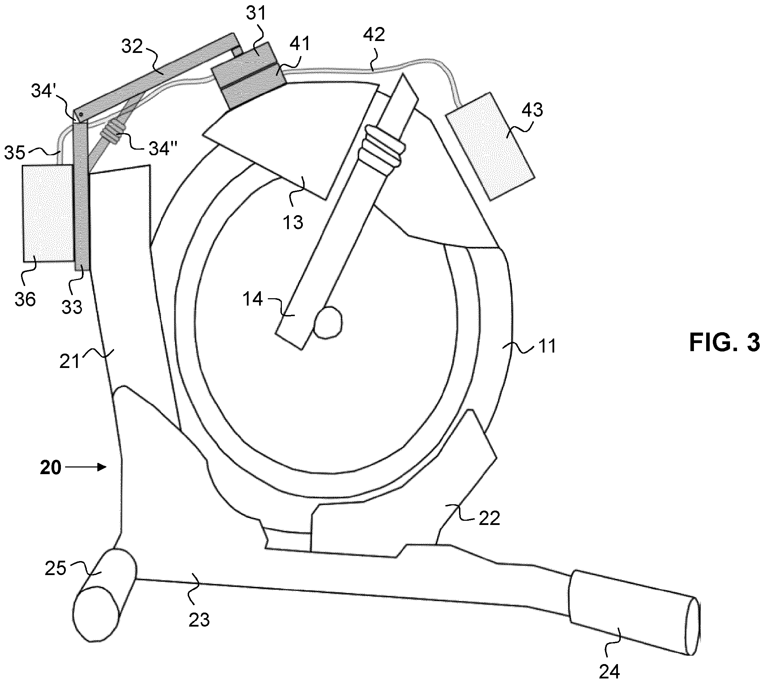

Fig. 3 shows the view of Fig. 2 with the front wheel 11 of the two-wheeler 20 engaging the loading station stand 30.

Fig. 4A, 4B and 4C show three detail views of the alignment process between the primary coil of the loading station 30 and the secondary coil of the vehicle station 40, especially a guiding structure for optimal coil alignment having the reference numeral 37. The guiding structure 37 for optimal coil alignment has the shape of a hollow pyramidal frustum with a front side 38', two adjacent side surfaces 38 (only one visible in Fig. 4A, 4B and 4C) and a back surface 38" having a common edge with both side surfaces 38. The four surfaces of the guiding structure 37 are shown as to be transparent. The station coil case 31 has on both sides in the longitudinal direction of the rods 32 and 33 a plate 38 attached at the low edges of the underside 39. Such a structure 37 is providing lateral guidance, which might be sufficient. In the embodiment shown, these plates 38 are trapezoid and the side edges are connected to a front plate 38' and here optionally to a back plate ".

The plates 38 are oriented outside from the underside 39 so that the vehicle coil case 41 is automatically guided towards surface 39 by the tapering plates 38 to ensure the horizontal and/or vertical alignment, i.e. two-dimensional in-plane, when there are either a front 38' and/or a back surface 38". This is not just true for optimal power transfer but also for optimal reduction of outer magnetic fields. The guide structure 37 ensures that the two surfaces 39 and 49 of the underside of the two cases 31 and 41 are moving one to another, since the guide structure 37 works as a tapering funnel finally ensuring (near) contact between the two surfaces 39 and 49, additionally magnets at that surface may ensure the touching surface. The inductive power transferring coils are provided in parallel near the surfaces 39 and 49.

Furthermore the guiding structure 37 protects the surfaces 39 and 49 from weather influence. A protecting cover can be provided on the vehicle surface 49 which has to be removed before contacting.

**LIST OF REFERENCE SIGNS**

| | | | |
|---|---|---|---|
| 10 | two-wheeler | 34" | spring connection rod |
| 11 | front wheel | 35 | connection cable |
| 12 | rear wheel | 36 | power supply and control unit |
| 13 | front wheel cover | 37 | guiding structure for optimal coil alignment |
| 14 | fork | | |
| 15 | front fairing | 38 | side surface |
| 16 | main body | 38' | front surface |
| 20 | two-wheeler stand | 38" | back surface |
| 21 | upper groove for the front wheel | 39 | underside of station coil case |
| | | 39' | edge of lower side of station coil case |
| 22 | lower groove for the front wheel (wheel engaged) | | |
| | | 40 | vehicle part of inductive power interface |
| 22' | lower groove for the front wheel (wheel not engaged) | | |
| | | 41 | vehicle coil case |
| 23 | basis frame | 42 | connection cable |
| 24 | free end at the V-shape | 43 | control unit |
| 25 | free end at the T-shape | 44 | charger |
| 30 | stationary part of inductive power interface | 45 | battery |
| | | 46 | connection cable49 upper side of vehicle coil case |
| 31 | station coil case | | |
| 32 | connection rod | | |
| 33 | attachment rod for frame | 49' | edge of upper side of vehicle coil case |
| 34 | resilient hinge joint | | |
| 34' | hinge joint | | |

## Claims

1. Charging station for a two-wheeler (10) comprising a stationary loading part (30) having a primary coil and a vehicle side part (40) having a secondary coil, wherein, when the primary coil of the stationary loading part (30) and the secondary coil of the vehicle side part (40) are positioned in a predetermined position one from another a loading energy is inductively transmitted from a stationary power supply (36) connected with the primary coil to a battery (45) to be positioned in the two-wheeler (10) connected with the secondary coil, **characterized in that** the charging station further comprises a front wheel directional fixing stand (20) for a directional position determination of a front wheel (11) of the two-wheeler (10), **in that** the secondary coil of the vehicle side part (40) is positioned at the front portion of the two-wheeler (10) and the primary coil of the stationary loading part (30) is positioned (32, 33, 34) in relation to the front wheel directional fixing stand (20) in a way that the primary coil and secondary coil are positioned in said predetermined position one from another for the transfer of loading energy, when the front wheel (11) is engaging the front wheel directional fixing stand (20) achieving the directional position determination of said front wheel (11).

2. Charging station according to claim 1, wherein the predetermined position of the primary coil and secondary coil comprises a predetermined distance between the primary coil and secondary coil, an alignment of these coils in parallel plans and an alignment of the coils one above the other.

3. Charging station according to claim 1 or 2, wherein the secondary coil is positioned in a vehicle coil case (41) on a front wheel cover (13) of the two-wheeler (10), at the centre portion of a handle bar of the two-wheeler (10) or at the centre portion of a mudguard of the two-wheeler (10).

4. Charging station according to claim 3, wherein the primary coil is positioned in a station coil case (31) resiliently (34; 34', 34") connected via a rod assembly (32, 33, 34) to the front wheel directional fixing stand (20), wherein the underside (39) of the station coil case (31) is positioned at a place which would be taken up by the vehicle coil case (41) when the front wheel (11) is engaging the front wheel directional fixing stand (20) achieving the directional position determination of said front wheel (11), so that the station coil case (31) is pushed back by the upper side (49) of the vehicle coil case (41) achieving said predetermined position between the primary and secondary coils.

5. Charging station according to any one of claims 1 to 4, wherein the rod assembly (32, 33, 34) is configured to be pivoted in the vertical plane encompassing the longitudinal direction of the front wheel directional fixing stand (20).

6. Charging station according to claim 5, wherein the rod assembly (32, 33, 34) is configured to have pivotal play for a lateral movement outside said vertical plane.

7. Charging station according to any one of claims 1 to 6, wherein the front wheel directional fixing stand (20) comprising an essentially vertically oriented front portion of the front wheel (11) receiving groove (21).

8. Charging station according to claim 7, wherein a front wheel retaining element (22, 22') is positioned in a predetermined distance from the groove (21), so that a form or force fit maintains the front wheel (11) of the two-wheeler (10) to be charged in position in the groove (21).

9. Charging station according to claim 8, wherein the front wheel retaining element is a horizontally pivoting arc shaped groove (22, 22') in a predetermined longitudinal distance from the groove (21) or an in cross-section circular segment embossment on the ground in a predetermined longitudinal distance from the groove (21) or an circular segment cut out recess from the ground in front of the groove (21).

10. Charging station according to any one of claims 1 to 9, wherein the station coil case (31) comprises a guiding element (37) at its underside (39) configured to guide at least one edge (49') of the upper side surface (49) of the vehicle coil case (41) towards a corresponding edge (39') of the lower side surface (39) of the station coil case (31).

11. Charging station according to claim 10, wherein the guiding element (37) comprises two plates (38) attached at opposite side edges of said underside (39) widening from the underside edges or comprises a hollow pyramidal frustum (38, 38', 38") attached at all edges of said underside (39) widening from the underside edges.

12. Stationary part (30) of a inductive charging station for a two-wheeler (10) to be used in a charging station according to any one of claims 1 to 11, comprising a station coil case (31) housing a primary coil, and further comprising a rod assembly (32, 33, 34) configured to be resiliently connected to a front wheel directional fixing stand (20), wherein the underside (39) of the station coil case (31) is positioned at a place which would be taken up by a vehicle coil case (41) of a vehicle side part (40) of the inductive charging station, when the front wheel (11) is engaging the front wheel directional fixing stand (20) achieving the directional position determination of said front wheel (11), so that the station coil case (31) is pushed back by the upper side (49) of the vehicle coil case (41) achieving the predetermined position between the primary and secondary coils.

13. Vehicle side part (40) of a inductive charging station for a two-wheeler (10) to be used in a charging station according to any one of claims 1 to 11, comprising a vehicle coil case (41) housing a secondary coil, wherein the vehicle coil case (41) is attached at the front portion of the two-wheeler (10) in a way that the upper side (49) of the vehicle coil case (41) is positioned at a place which would be taken up by a station coil case (31) of a station side part (40) of the inductive charging station, when the front wheel (11) is engaging the front wheel directional fixing stand (20) achieving the directional position determination of said front wheel (11), so that the vehicle coil case (41) pushes back the underside (39) of the station coil case (31) achieving the predetermined position between the primary and secondary coils.
